(19) Europäisches Patentamt / European Patent Office / Office européen des brevets

(11) **EP 2 937 232 B1**

(12) **FASCICULE DE BREVET EUROPEEN**

(45) Date de publication et mention de la délivrance du brevet:
**19.07.2017 Bulletin 2017/29**

(51) Int Cl.:
**B60C 23/04** *(2006.01)* **B60W 40/13** *(2012.01)*
**B60T 8/172** *(2006.01)* **G01L 17/00** *(2006.01)*

(21) Numéro de dépôt: **15164890.4**

(22) Date de dépôt: **23.04.2015**

(54) **PROCÉDÉ ET DISPOSITIF DE DÉTERMINATION DE LA CHARGE D'UNE ROUE, ROUE ÉQUIPÉE D'UN TEL DISPOSITIF, ET PROCÉDÉ ET SYSTÈME DE CARACTÉRISATION D'UN VÉHICULE**

VERFAHREN UND VORRICHTUNG ZUR BESTIMMUNG DER RADLAST, MIT EINER SOLCHEN VORRICHTUNG AUSGESTATTETES RAD UND VERFAHREN UND SYSTEM ZUR CHARAKTERISIERUNG EINES FAHRZEUGS

METHOD AND DEVICE FOR DETERMINING THE LOAD OF A WHEEL, WHEEL PROVIDED WITH SUCH A DEVICE, AND METHOD AND SYSTEM FOR CHARACTERISING A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.04.2014 FR 1453751**

(43) Date de publication de la demande:
**28.10.2015 Bulletin 2015/44**

(73) Titulaire: **Capteur Technologie Electronique et Systemes SA**
**34270 Saint-Mathieu-de-Treviers (FR)**

(72) Inventeurs:
• **Coudouel, Denis**
**34160 Castries (FR)**
• **Lea, Etienne**
**34070 MONTPELLIER (FR)**
• **Lea, Jean-Paul**
**34070 MONTPELLIER (FR)**
• **Micalef, Jean-Paul**
**34790 GRABELS (FR)**

(74) Mandataire: **Pontet Allano & Associes**
**18 rue de la République**
**34000 Montpellier (FR)**

(56) Documents cités:
**EP-A2- 2 679 411      US-A1- 2009 071 237**

## Description

### Domaine technique

La présente invention concerne un procédé de détermination de la charge d'une roue d'un véhicule. Elle concerne également un dispositif mettant en oeuvre un tel procédé, une roue équipée d'un tel dispositif, et un procédé et un système de caractérisation d'un véhicule, notamment pour déterminer le poids d'un véhicule.

Le domaine de l'invention est plus particulièrement, le domaine du pesage embarqué d'un véhicule, qu'il soit à l'arrêt ou en mouvement.

### Etat de la technique

Le pesage des véhicules, notamment mais non limitativement le pesage de poids-lourds, présente une importance capitale, d'une part pour déterminer si le véhicule respecte la réglementation en vigueur et d'autre part pour déterminer si le véhicule est utilisé en conformité avec les règles de conception, en vue d'éviter des risques d'accidents.

Il existe actuellement deux catégories de systèmes de pesage : les systèmes de pesage non-embarqués et les systèmes de pesage embarqués. L'invention concerne les systèmes de pesage embarqués.

Les systèmes de pesage embarqués actuellement connus utilisent des capteurs variés, positionnés en des emplacements spécifiques du véhicule, et prévus pour mesurer la pression dans le système de suspension ou encore la déformation mécanique au niveau des suspensions mécaniques. Le poids du véhicule est estimé en fonction de la pression/déformation mesurée.

D'autres systèmes mettent en oeuvre des jauges de déformation, positionnées au niveau des jantes du véhicule pour mesurer les déformations. Les déformations mesurées par les jauges sont utilisées pour déterminer la charge et les efforts dynamiques qui s'appliquent sur les jantes à partir de modélisations complexes.

Les procédés et systèmes de l'état de la technique mettent en oeuvre une modélisation complexe consommatrice en temps et en ressources, comme le document EP 2 679 411 A2 peux le divulguer en introduisant des réseaux neuronaux, en accord avec les préambules des revendications 1 et 8. De plus, un modèle spécifique doit être déterminé pour chaque type/modèle de roue, ce qui nécessite beaucoup de temps et d'essais. En outre, les procédés et systèmes de l'état de la technique ne permettent pas de déterminer la charge d'une roue ou le poids du véhicule avec une précision satisfaisante.

Un but de la présente invention est de remédier aux inconvénients précités.

Un but de la présente invention est de proposer un procédé et un dispositif pour déterminer la charge d'une roue plus simples, moins consommateurs en temps et en ressource.

Un autre but de la présente invention est de proposer un procédé et un dispositif pour déterminer la charge d'une roue facilement adaptables à différents types/modèle de roue.

Encore un autre but de la présente invention est de proposer un procédé et un dispositif pour déterminer la charge d'une roue de manière plus précise comparé aux systèmes de l'état de la technique.

### Exposé de l'invention

L'invention permet d'atteindre au moins un de ces objectifs par un procédé pour déterminer une charge d'une roue d'un véhicule, caractérisé en ce qu'il comprend les étapes suivantes :

- détermination d'au moins une donnée, dite d'empreinte, relative à une surface de contact entre ladite roue et le sol ; et
- calcul de la charge de ladite roue à partir d'une relation prédéterminée reliant ladite au moins une donnée d'empreinte à ladite charge.

Le procédé selon l'invention permet donc de se baser sur l'empreinte au sol, c'est à dire sur la surface de contact physique entre la roue et le sol, pour déterminer la charge qui s'applique sur la roue. En effet, les inventeurs de la présente demande ont constaté que la charge d'une roue est directement reliée à la surface de contact, et en particulier la longueur de la surface de contact entre la roue et le sol.

Le procédé selon l'invention permet donc d'utiliser des données peu complexes pour calculer la charge de la roue. De plus, ces données peuvent être déterminées d'une manière similaire pour tous les modèles\types de roues. Le procédé ne nécessite donc pas une adaptation particulière à un modèle de roue spécifique et peut être utilisé pour toutes les roues.

En outre, le procédé permet d'éviter d'avoir à réaliser des modélisations complexes et d'utiliser des modèles complexes consommateurs en temps et en ressources.

Selon une version, le procédé selon l'invention peut comprendre une étape préliminaire de mesure d'une charge, dite de référence, du véhicule et d'une surface de contact, dite de référence, entre la roue et le sol pour ladite charge de référence.

Dans ce cas, l'étape de détermination de la donnée d'empreinte peut être mise en oeuvre pour déterminer une variation de ladite surface de contact par rapport à la surface de référence, en particulier une variation de la longueur de la surface de contact, et le calcul de la charge de la roue peut être réalisé en fonction :

- de ladite charge de référence, et
- de ladite variation de la surface de contact, en particulier de ladite variation de la longueur de la surface de contact.

Dans cette version du procédé selon l'invention, la relation utilisée pour déterminer la charge du véhicule est une relation ou un table reliant une variation de la surface de contact, et en particulier de la longueur de la surface de contact, à une variation de la charge par rapport d'une part à la surface de contact de référence et d'autre part à la charge de référence.

Par exemple, la surface de contact de référence et la charge de référence peuvent être déterminées à l'arrêt lorsque le véhicule n'est soumis à aucune charge additionnelle que son propre poids. Des mesures expérimentales peuvent ensuite déterminer pour une ou plusieurs valeurs de charges différentes, la variation de la surface de contact. Lorsque la charge du véhicule varie, elle peut être déterminée en connaissant la surface de contact de référence et la charge de référence, et en mesurant la variation de la surface de contact.

Selon une autre version préférée, le procédé selon l'invention peut en outre comprendre une étape de mesure d'au moins une donnée, dite de pression, relative à une pression à l'intérieur de la roue du véhicule.

Dans ce cas, le calcul de la charge de la roue peut être réalisé en fonction de la donnée de pression et de la donnée d'empreinte, en particulier de la longueur de la surface de contact, notamment par multiplication de ladite pression avec ladite donnée d'empreinte, et en particulier avec ladite longueur de la surface de contact.

Selon un exemple de réalisation nullement limitatif, la charge en Newton, notée $F_c$, qui s'applique à la roue peut être déterminée selon la relation suivante :

$$F_c = P_r \times S_e \quad (1)$$

avec $P_r$ la pression en Pascal et Se la surface de contact en m$^2$.

Préférentiellement, l'étape de détermination de l'au moins une donnée d'empreinte peut comprendre une mesure d'au moins une donnée relative à la longueur de la surface de contact entre ladite roue et le sol suivant une direction perpendiculaire à l'axe de ladite roue.

Une telle longueur peut être déterminée par mesure en utilisant un ou plusieurs capteurs, intégrés ou non à la roue.

Par exemple, il est possible d'utiliser deux séries de capteurs capacitifs ou condensateurs, positionnées sur une même face latérale de la roue. Chaque série comporte une pluralité de capteurs répartis sur toute la périphérie de la roue de manière circulaire et à égale distance du centre de la roue. Une des séries, dite série centrale, est disposée sensiblement au centre de la roue et l'autre série, dite série périphérique, est disposée à la jonction de la bande de roulement de la roue avec la face sur laquelle est disposée la série centrale. Ainsi, lorsque la roue se déforme au contact du sol, la distance entre les séries de capteurs est modifiée sur toute la surface de contact. Le signal mesuré localement par chacun de ces capteurs de chaque série dépend de la distance qui sépare localement l'une des séries de capteurs de l'autre série de capteurs, et peut être utilisé pour déterminer précisément la longueur de la surface de contact de la roue avec le sol.

En outre, l'étape de détermination de l'au moins une donnée d'empreinte peut comprendre une détermination d'au moins une donnée relative à la largeur de la surface de contact entre ladite roue et le sol suivant l'axe de ladite roue.

Une telle détermination peut être réalisée par mesure en utilisant un ou plusieurs capteurs, intégrés ou non à la roue.

Par exemple, il est possible d'utiliser deux séries de capteurs capacitifs ou condensateurs. L'une des séries, dite intérieure, est positionnée à la jonction de la bande de roulement de la roue avec une des faces latérales de la roue, et l'autre des séries, dite extérieure, est positionnée à la jonction de la bande de roulement de la roue avec l'autre des faces latérales de la roue. Chaque série comporte une pluralité de capteurs répartis sur toute la périphérie de la roue de manière circulaire et à égale distance du centre de la roue et de l'autre série de capteurs lorsque la roue n'est pas déformée au contact du sol. Ainsi, lorsque la roue se déforme au contact du sol, la distance entre les capteurs est modifiée sur toute la surface de contact. Le signal mesuré localement par chacun de ces capteurs de chaque série dépend de la distance qui sépare localement l'une des séries de capteurs de l'autre, et peut être utilisé pour déterminer précisément la largeur de la surface de contact de la roue avec le sol.

Alternativement, la largeur de la surface de contact peut être déterminée en fonction de la pression mesurée. En effet, les inventeurs de la présente invention ont remarqué que la largeur, noté $W_r$, de la surface de contact d'une roue dépend directement de la pression qui règne dans la roue. Pour cela, des essais peuvent être menés sur la roue pour déterminer de manière empirique les valeurs de la largeur $W_r$ de la surface de contact. Il suffit ensuite de lire la largeur correspondant à la pression mesurée.

Selon encore une autre alternative, la largeur de la roue peut être considérée comme étant constante. Dans ce cas, l'étape de détermination de la donnée d'empreinte peut comprendre uniquement une mesure de la longueur de la surface de contact entre la roue et le sol.

Selon un exemple de réalisation particulier, lorsque le véhicule est à l'arrêt, la charge notée $F_c$ s'appliquant à une roue peut être déterminée selon la relation suivante :

$$F_c = \frac{2}{3} \times W_r \times P_r \times L_r \quad (2)$$

avec :

- $W_r$ la largeur de la surface de contact,
- $P_r$ la pression dans la roue, et
- $L_r$ la longueur de la surface de contact.

En outre, lorsque le véhicule est en mouvement, l'au moins une donnée relative à la longueur mesurée peut comprendre un temps de contact avec le sol d'un capteur disposé sur ladite roue, et en particulier sur la bande de roulement de la roue.

Ainsi, un unique capteur peut être utilisé pour déterminer la longueur de la surface de contact. Dans ce cas, le procédé comprend une mesure du temps total pendant lequel le capteur est en contact du sol. Ce temps multiplié par la vitesse du véhicule, ou la vitesse de rotation de la roue permet de déterminer la longueur totale de la surface de contact.

Selon un exemple de réalisation particulier, lorsque le véhicule est en mouvement à une vitesse $V$, la charge notée $F_c$ s'appliquant à une roue peut être déterminée selon la relation suivante :

$$F_c = \frac{2}{3} \times W_r \times P_r \times V \times T_C \qquad (3)$$

avec :

- $W_r$ la largeur de la surface de contact,
- $P_r$ la pression dans la roue,
- $V$ la vitesse du véhicule ou de la roue, et
- $T_c$ le temps de contact au sol d'un capteur disposé sur la roue.

Suivant un autre aspect de la même invention, il est proposé un procédé pour caractériser un véhicule comprenant plusieurs roues, caractérisé en ce qu'il comprend les étapes suivantes :

- détermination des charges d'au moins deux roues, en particulier de toutes les roues, dudit véhicule suivant le procédé selon l'invention ; et
- calcul d'au moins un paramètre relatif audit véhicule en fonction desdites charges desdites roues.

Le procédé selon l'invention peut avantageusement comprendre au moins une mesure d'au moins une donnée relative à :

- une inclinaison du véhicule suivant une direction d'un essieu du véhicule, et/ou
- une inclinaison du véhicule suivant une direction perpendiculaire à un essieu du véhicule, ou encore
- une inclinaison du véhicule suivant une direction transversale ou diagonale par rapport au véhicule ;

le calcul d'au moins un paramètre relatif au véhicule prenant en compte ladite mesure.

La mesure d'une telle inclinaison permet de caractériser le véhicule même si ce dernier n'est pas sur un sol parfaitement plat.

Selon un exemple non limitatif, le paramètre calculé peut comprendre :

- un poids total du véhicule ou un poids d'un essieu du véhicule ou un poids sur un côté du véhicule, et/ou
- un centre de gravité du véhicule ou un centre de gravité d'un essieu du véhicule ou un centre de gravité sur un côté du véhicule.

Suivant encore un autre aspect de la même invention, il est proposé un dispositif pour déterminer une charge d'une roue d'un véhicule, caractérisé en ce qu'il comprend :

- au moins un moyen pour déterminer au moins une donnée, dite d'empreinte, relative à une surface de contact entre ladite roue et le sol ;
- au moins un moyen de calcul de la charge de ladite roue à partir d'une relation prédéterminée reliant ladite au moins une donnée d'empreinte à ladite charge.

Selon une première version, le moyen pour déterminer une donnée d'empreinte peut être configuré pour déterminer une variation de la surface de contact entre la roue et le sol, et en particulier une variation de la longueur de ladite surface de contact.

Dans ce cas, le moyen de calcul est configuré pour déterminer la charge de la roue en fonction d'une charge de référence, d'une surface de contact de référence et de ladite variation de la surface de contact.

Selon une deuxième version préférée, le dispositif selon l'invention peut en outre comprendre au moins un moyen de mesure d'au moins une donnée, dite de pression, relative à une pression à l'intérieur de ladite roue.

Dans ce cas, le moyen pour déterminer une donnée d'empreinte peut être configuré pour déterminer la surface de contact entre la roue et le sol, et en particulier la longueur de ladite surface de contact. Le moyen de calcul est alors configuré pour déterminer la charge de la roue en fonction de ladite pression et de ladite surface de contact.

Le moyen de calcul peut communiquer de manière sans fil avec les moyens de mesure.

En particulier, le ou les moyens de mesure de l'au moins une donnée d'empreinte peu(ven)t, au moins en partie, être intégré(s) à la roue, c'est-à-dire disposé(s) sur la roue ou dans l'épaisseur du pneu, ou encore disposé(s) dans la roue au niveau du réservoir d'air de la roue.

De plus, le moyen de mesure de la pression peut être intégré à la roue, c'est-à-dire disposé dans la roue au niveau du réservoir d'air de la roue, ou encore disposé dans la valve de la roue.

Le moyen pour déterminer au moins une donnée d'empreinte peut comprendre au moins un moyen de mesure d'une donnée relative à la longueur de la surface contact suivant une direction perpendiculaire à l'axe de la roue.

Un tel moyen de mesure peut comprendre un ou plusieurs capteurs, intégrés ou non à la roue.

Par exemple, un tel moyen de mesure peut comprendre deux séries de capteurs capacitifs ou condensateurs, positionnées sur une même face latérale de la roue. Chaque série comporte une pluralité de capteurs répartis sur toute la périphérie de la roue de manière circulaire et à égale distance du centre de la roue. Une des séries, dite série centrale, est disposée sensiblement au centre de la roue et l'autre série, dite série périphérique, est disposée à la jonction de la bande de roulement de la roue avec la face sur laquelle est disposée la série centrale. Ainsi, lorsque la roue se déforme au contact du sol, la distance entre les séries de capteurs est modifiée sur toute la surface de contact. Le signal mesuré localement par chacun de ces capteurs de chaque série dépend de la distance qui sépare localement l'une des séries de capteurs de l'autre série de capteurs, et peut être utilisé pour déterminer précisément la longueur de la surface de contact de la roue avec le sol.

En outre, le moyen de mesure d'une donnée relative à la longueur de la surface contact peut comprendre au moins un capteur disposé sur la roue pour mesurer un temps de contact entre le sol et ladite roue, lorsque le véhicule est en mouvement.

Un tel capteur peut être un capteur de pression ou un capteur de contrainte fixé à la bande de roulement de la roue.

Le moyen pour déterminer au moins une donnée d'empreinte peut comprendre au moins un moyen de mesure d'une donnée relative à la largeur de la surface contact suivant l'axe de la roue.

Un tel moyen de mesure peut comprendre un ou plusieurs capteurs, intégrés ou non à la roue.

Par exemple, il est possible d'utiliser deux séries de capteurs capacitifs ou condensateurs. L'une des séries, dite intérieure, est positionnée à la jonction de la bande de roulement de la roue avec une des faces latérales de la roue, et l'autre des séries, dite extérieure, est positionnée à la jonction de la bande de roulement de la roue avec l'autre des faces latérales de la roue. Chaque série comporte une pluralité de capteurs répartis sur toute la périphérie de la roue de manière circulaire et à égale distance du centre de la roue et de l'autre série de capteurs lorsque la roue n'est pas déformée au contact du sol. Ainsi, lorsque la roue se déforme au contact du sol, la distance entre les capteurs est modifiée sur toute la surface de contact. Le signal mesuré localement par chacun de ces capteurs de chaque série dépend de la distance qui sépare localement l'une des séries de capteurs de l'autre, et peut être utilisé pour déterminer précisément la largeur de la surface de contact de la roue avec le sol.

Suivant encore un autre aspect de l'invention, il est proposé un système pour caractériser un véhicule comprenant plusieurs roues, caractérisé en ce qu'il comprend :

- au moins un dispositif de détermination de la charge d'une roue selon l'invention, ou des moyens configurés pour mettre en oeuvre toutes les étapes du procédé pour déterminer la charge d'une roue selon l'invention, pour déterminer les charges d'au moins deux, de préférence de toutes, les roues dudit véhicule ; et
- un moyen de calcul d'au moins un paramètre relatif audit véhicule en fonction desdites charges desdites roues.

Avantageusement, le système selon l'invention peut en outre comprendre au moins un moyen pour mesurer une donnée relative à :

- une inclinaison du véhicule suivant une direction d'un essieu du véhicule,
- une inclinaison du véhicule suivant une direction perpendiculaire à un essieu du véhicule, et/ou
- une inclinaison du véhicule suivant une direction transversale ou diagonale par rapport au véhicule.

De manière non limitative, un tel moyen de mesure peut comprendre au moins un inclinomètre, ou tout moyen équivalent, positionné suivant la direction selon laquelle l'inclinaison doit être mesurée.

Le moyen de calcul peut être configuré pour déterminer une donnée relative à :

- un poids total du véhicule ou un poids d'un essieu du véhicule ou un poids sur un côté du véhicule, et/ou
- un centre de gravité du véhicule ou un centre de gravité d'un essieu du véhicule ou un centre de gravité sur un côté du véhicule.

Le moyen de calcul peut être un calculateur, un processeur, une puce électronique, un ordinateur de bord du véhicule, etc.

Suivant encore un autre aspect de la même invention, il est proposé une roue pour véhicule, caractérisée en ce qu'elle comprend :

- au moins un moyen de mesure d'au moins une donnée, dite de pression, relative à une pression à l'intérieur de ladite roue ;
- au moins un moyen pour déterminer au moins une donnée, dite d'empreinte, relative à une surface de contact entre ladite roue et le sol ;
- au moins un moyen de transmission sans fil de signaux mesurés vers un module externe à ladite roue, par exemple un module ou une unité de gestion ou de calcul.

Le moyen de transmission sans fil peut être un moyen de transmission par wifi, par infrarouge, par Bluetooth®, ou par ondes radio d'une fréquence prédéterminée.

Le moyen pour déterminer l'au moins une donnée d'empreinte peut comprendre :

- au moins un capteur pour mesurer un temps de contact entre ladite roue et le sol, lorsque ladite roue est en rotation, et/ou
- plusieurs capteurs capacitifs ou des condensateurs disposés sensiblement sur toute la périphérie de ladite roue, tel que décrit plus haut.

Suivant un autre aspect de la même invention, il est proposé un véhicule comprenant :

- des moyens pour mettre en oeuvre les étapes du procédé selon l'invention pour déterminer la charge au niveau d'au moins une, de préférence de chaque, roue dudit véhicule ;
- des moyens pour mettre en oeuvre les étapes du procédé selon l'invention pour caractériser le véhicule ;
- un dispositif selon l'invention pour déterminer la charge au niveau d'au moins une, de préférence de chaque, roue dudit véhicule ;
- un système selon l'invention pour caractériser ledit véhicule ; ou
- au moins une roue selon l'invention.

Un tel véhicule peut être un véhicule personnel, camion, un poids-lourd un avion, etc., et plus généralement tout véhicule comprenant au moins deux roues.

## Description des figures et modes de réalisation

D'autres avantages et caractéristiques apparaîtront à l'examen de la description détaillée d'exemples nullement limitatifs, et des dessins annexés sur lesquels :

- les FIGURES 1a-1d sont des représentations schématiques d'un premier exemple d'une roue selon l'invention équipée d'un premier exemple d'un dispositif selon l'invention ;
- les FIGURES 2a-2d sont des représentations schématiques d'un exemple d'une roue équipée d'un deuxième exemple d'un dispositif selon l'invention, lorsque la roue est en mouvement ;
- la FIGURE 3 est une représentation schématique d'un exemple d'un véhicule équipé d'un exemple système de caractérisation selon l'invention ;
- la FIGURE 4 est une représentation d'un exemple de procédé de détermination d'une charge d'une roue selon l'invention ; et
- la FIGURE 5 est une représentation d'un exemple de procédé de caractérisation d'un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

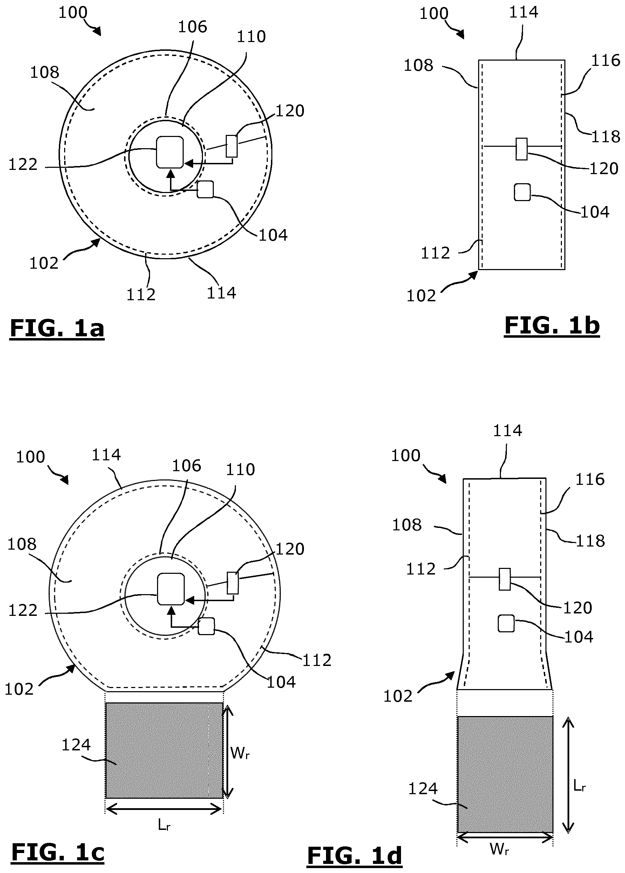

La FIGURE 1a est une représentation schématique d'un premier exemple d'une roue équipée d'un dispositif selon l'invention, suivant une vue de profil, dans une configuration dans laquelle aucune charge ne s'applique à la roue. La FIGURE 1b est une représentation schématique de la roue de la FIGURE 1a dans la même configuration mais suivant une vue de face. La FIGURE 1c est une représentation schématique de la roue des FIGURES 1a et 1b, suivant une vue de profil, dans une configuration dans laquelle une charge non-nulle s'applique à la roue. La FIGURE 1d est une représentation schématique de la roue de la FIGURE 1c dans la même configuration mais suivant une vue de face.

Le dispositif 100 représenté sur les FIGURES 1a-ad permet de déterminer la charge s'appliquant sur une roue 102.

Le dispositif 100 comprend un moyen 104 de mesure de la pression à l'intérieur de la roue 102. Le moyen de mesure de pression 104 peut être un capteur de pression disposé dans la roue 102 tel que représenté sur les FIGURES 1a-1d. Alternativement le capteur de pression peut être un manomètre, ou tout autre capteur permettant de déterminer la pression dans le pneu. De plus, le moyen de mesure de la pression 104 peut être disposé ailleurs que dans la roue 102, par exemple au niveau de la valve de la roue 102.

Le dispositif 100 comprend en outre un ensemble de capteurs capacitifs ou condensateurs permettant de déterminer la surface de contact de la roue 102 avec le sol, lorsqu'une charge est appliquée sur la roue, tel que montré en FIGURES 1c-1d. Pour ce faire, l'ensemble de capteurs comprend en tout trois séries de capteurs qui sont des capteurs capacitifs ou des condensateurs.

Une première série 106 de capteurs, dite série centrale, est disposée sur une face latérale 108 de la roue 102, sensiblement au niveau du moyeu 110 de la roue 102. Les capteurs de cette série centrale 106 sont disposés à égale distance de l'axe de la roue 102, suivant une trajectoire circulaire fermée.

Une deuxième série 112 de capteurs, dite série périphérique, est disposée sur la face latérale 108 de la roue 102, sensiblement au niveau la jonction entre cette face latérale 108 et la bande de roulement 114 de la roue 102. Les capteurs de cette série périphérique 112 sont disposés à égale distance de l'axe de la roue 102 et à égale distance des capteurs de la série centrale 106. Les capteurs de cette série périphérique 112 sont disposés sensiblement sur toute la périphérie de la roue 102, suivant une trajectoire circulaire fermée.

Une troisième série 116 de capteurs, dite série extérieure, est disposée sur la face latérale 118 de la roue 102, opposée à la face latérale 108, sensiblement au niveau la jonction entre cette face latérale 118 et la bande de roulement 114 de la roue 102. Les capteurs de cette série extérieure 112 sont disposés à égale distance de l'axe de la roue 102 et à égale distance des capteurs de la série périphérique 112. Les capteurs de cette série extérieure 116 sont disposés sensiblement sur toute la périphérie de la roue 102, suivant une trajectoire circulaire fermée.

Chacune des séries de capteurs 106, 112, 116 est composée de capteurs indépendants reliés à un module de gestion 120 recevant de chaque capteur le signal mesuré par ce capteur. Le signal mesuré par chaque capteur d'une série de capteurs dépend de la distance qui sépare ce capteur d'un autre capteur d'une autre série.

Le dispositif 100 comprend un outre un module de calcul 122, tel qu'un processeur, recevant des signaux de mesure de la part du capteur de pression 104 et du module de gestion 120 des séries de capteurs et qui calcule la charge s'appliquant à la roue 102 en fonction de ces signaux. La communication entre d'une part le module de calcul 122 et d'autre part le capteur de pression 104 et le module de gestion 120 des séries de capteurs se fait de manière sans fil, par exemple par Bluetooth® etc.

L'application d'une charge sur la roue 102 crée une surface de contact 124 entre la roue 102 et le sol. Cette surface de contact 124 présente une largeur $W_r$, mesurée suivant l'axe de la roue et une longueur $L_r$ mesurée suivant une direction perpendiculaire à l'axe de la roue, par les trois séries de capteurs 106, 112 et 116.

En effet, le signal mesuré localement par chaque capteur de la série centrale 106, dépend de la distance qui sépare localement ce capteur du ou des capteurs de la série périphérique 112. Lorsque la roue 102 se déforme sous la charge qu'elle supporte, tel que montré sur la FIGURE 1c, la distance qui sépare les capteurs de la série centrale 106 des capteurs de la série périphérique 112 sur toute la longueur de la surface de contact 124 diminue. Par conséquent, le signal mesuré par chacun des capteurs de la série périphérique 112 se trouvant au niveau de la surface de contact 124 augmente. En déterminant le nombre de capteurs de la série périphérique 112 dont le signal mesuré augmente, il est possible de mesurer la longueur $L_r$ de la surface de contact 124.

D'une manière comparable, le signal mesuré localement par chaque capteur de la série extérieure 116, dépend de la distance qui sépare localement ce capteur du ou des capteurs de la série périphérique 112. Lorsque la roue 102 se déforme sous la charge qu'elle supporte, tel que montré sur la FIGURE 1d, la distance qui sépare les capteurs de la série extérieure 116 des capteurs de la série périphérique 112 sur toute la largeur de la surface de contact 124 augmente. Par conséquent, le signal mesuré par chacun des capteurs de la série extérieure se trouvant au niveau de la surface de contact 124 diminue. En déterminant le signal mesuré le plus faible par les capteurs de la série extérieure, il est possible de déterminer la largeur $W_r$ de la surface de contact 124.

Les opérations de mesure de la largeur $W_r$ et de la longueur $L_r$ sont préférentiellement réalisées par le module de gestion 120 auquel sont connectés tous les capteurs de toutes les séries 106, 112 et 116 de capteurs.

Une fois toutes les grandeurs mesurées, le module de calcul détermine la charge de la roue 102 en utilisant la relation suivante :

$$F_c = \frac{2}{3} \times W_r \times P_r \times L_r \quad (2)$$

avec :

- $W_r$ la largeur de la surface de contact,
- $P_r$ la pression dans la roue, et
- $L_r$ la longueur de la surface de contact.

Bien entendu une partie ou la totalité des séries de capteurs peut être remplacée par d'autres types de capteurs tels que des capteurs infrarouges ou une ou des caméras adéquatement positionnées et permettant de visualiser la surface de contact et d'en déterminer la longueur et la largeur.

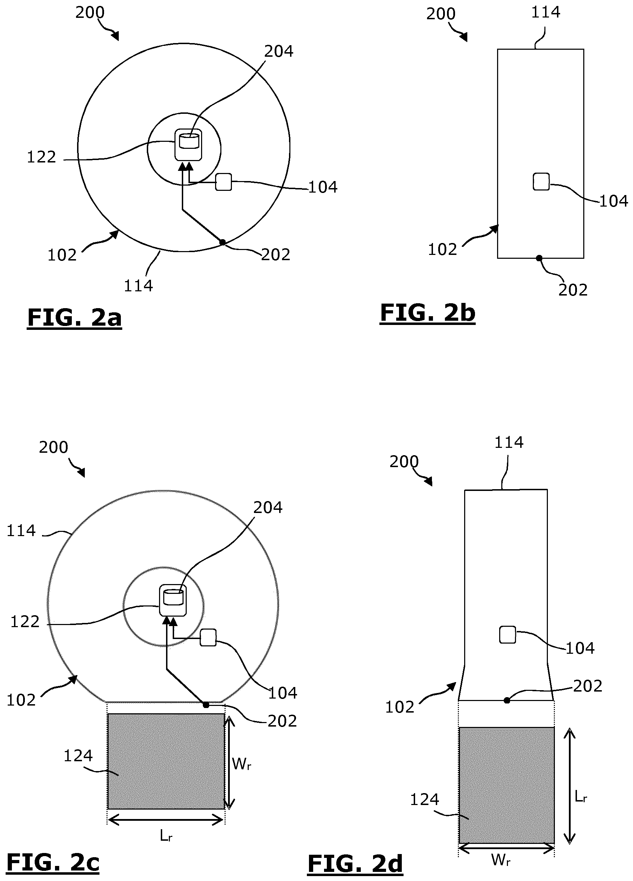

La FIGURE 2a est une représentation schématique d'un deuxième exemple d'une roue équipée d'un dispositif selon l'invention, suivant une vue de profil, dans une configuration dans laquelle aucune charge ne s'applique à la roue. La FIGURE 2b est une représentation schématique de la roue de la FIGURE 2a dans la même configuration mais suivant une vue de face. La FIGURE 2c est une représentation schématique de la roue des FIGURES 2a et 2b, suivant une vue de profil, dans une configuration dans laquelle une charge non-nulle s'applique à la roue. La FIGURE 2d est une représentation schématique de la roue de la FIGURE 2c dans la même configuration mais suivant une vue de face.

Le dispositif 200 représenté sur les FIGURES 2a-2d permet de déterminer la charge s'appliquant sur la roue 102 lorsque la roue est en mouvement, autrement dit lorsque le véhicule équipé par la roue 102 est en mouvement.

Ce dispositif 200 comprend, à l'instar du dispositif 100 des FIGURES 1a-1d, un dispositif 104 pour déterminer la pression interne de la roue 102 et un module de calcul 122 pour calculer la charge de la roue 102.

Le dispositif 200 comprend, à la place des séries de capteurs 106 et 112, un capteur 202, tel que par exemple un capteur de contrainte, pour déterminer la longueur de la surface de contact 124. Pour ce faire, le capteur 202 est disposé sur la bande de roulement 114 de la roue 102 et délivre un signal lorsqu'il est en contact avec le sol. Autrement dit, le capteur 202 permet de mesurer la durée de parcours nécessaire pour parcourir la surface de contact 114 à la vitesse à laquelle la roue 102 est en mouvement, i.e. la vitesse à laquelle le véhicule roule. Une fois la durée de parcours déterminée, la longueur $L_r$ de la surface de contact 114 peut être déterminée en multipliant la durée de parcours avec la vitesse de la roue 102. Le capteur 202 communique les signaux mesurés au module de calcul 122 de manière sans fil. Le module de calcul 122 détermine la durée de parcours en fonction des signaux fournis par le capteur de contrainte 202.

La vitesse de la roue 102 peut être fournie par un dispositif extérieur, tel qu'un capteur de vitesse équipant le véhicule. Alternativement, le dispositif peut comprendre un capteur de vitesse (non représenté) intégré dans la roue 102. Un tel capteur de vitesse est bien connu de l'homme du métier et ne sera pas décrit.

Le dispositif 200 permet de déterminer la largeur de la surface de contact à partir de la pression de la roue mesurée par le capteur de pression 104. En effet, les inventeurs de la présente invention ont remarqué que la largeur, noté $W_r$, de la surface de contact d'une roue dépend directement de la pression qui règne dans la roue. Pour cela, des essais peuvent être menés sur la roue 102 pour déterminer de manière empirique les valeurs de la largeur $W_r$ de la surface de contact en fonction de la pression de la roue 102. Ces valeurs sont ensuite mémorisées dans une base de données 204 au niveau du module de calcul 122. Lorsque la pression est mesurée par le capteur 104 et communiquée au module de calcul 122, ce dernier accède la base de données 204 pour y lire la largeur de la surface de contact 124.

Une fois toutes les grandeurs mesurées/déterminées, le module de calcul détermine la charge de la roue en utilisant la relation suivante.

$$F_c = \frac{2}{3} \times W_r \times P_r \times V \times T_C \quad (3)$$

avec :

- $W_r$ la largeur de la surface de contact,
- $P_r$ la pression dans la roue,
- $V$ la vitesse du véhicule ou de la roue, et
- $T_c$ le temps de contact au sol du capteur 202, c'est-à-dire la durée de parcours de la surface de contact.

Bien entendu il est possible de combiner certains éléments de l'exemple de réalisation des FIGURES 1a-1d avec l'exemple de réalisation des FIGURES 2a-2d, et *vice-versa,* pour la mesure/détermination de telle ou telle grandeur physique. Par exemple, dans l'exemple de réalisation des FIGURES 2a-2d, il est possible d'utiliser des capteurs pour mesurer la largeur de la surface de contact tel que prévu sur l'exemple de réalisation des FIGURES 1a-1d.

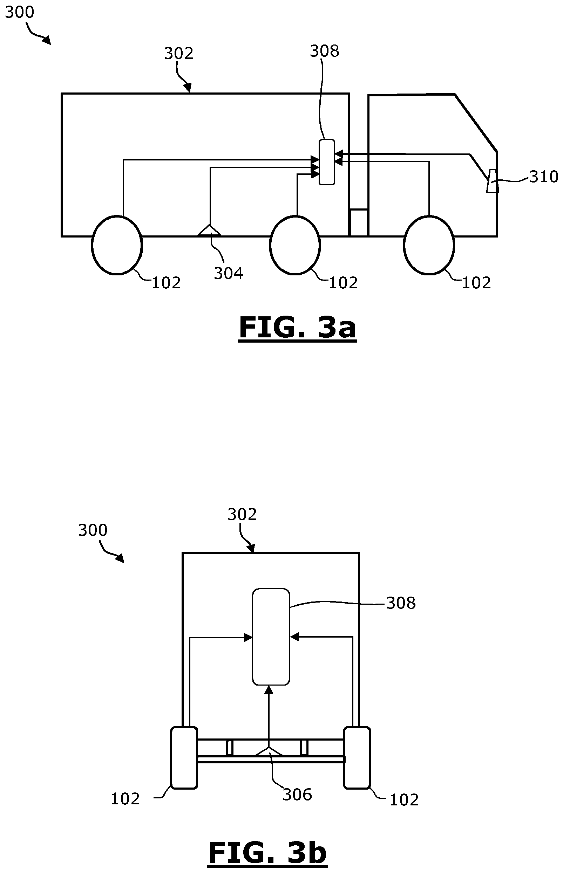

La FIGURE 3 est une représentation schématique d'un exemple d'un véhicule équipé d'un exemple d'un système de caractérisation selon l'invention.

Le système 300 représenté sur la FIGURE 3 est prévu pour caractériser un véhicule 302 qui est un poids-lourd comportant trois essieux comprenant chacun au moins deux roues.

Chaque roue du véhicule 302 est une roue 102 telle que celle représentée sur les FIGURES 1a-1d ou 2a-2d et équipée chacune d'un dispositif de mesure de la charge d'une roue tel que le dispositif 100 représenté sur les FIGURES 1a-1d ou le dispositif 200 représenté sur les FIGURES 2a-2d.

Le système 300 comprend en plus des roues 102 et/ou des dispositifs 100 ou 200, un premier inclinomètre 304 disposé sur le véhicule 302 et prévu pour mesurer l'inclinaison du véhicule 302 suivant la direction de la longueur du véhicule 302.

Le système 300 comprend en outre un deuxième inclinomètre 306 disposé sur le véhicule 302 et prévu pour mesurer l'inclinaison du véhicule 302 suivant la direction de la largeur du véhicule 302.

Le système 300 comprend une unité centrale de calcul 308 connectée de manière sans fil d'une part à chacune des roues 102, et en particulier au dispositif de mesure de la charge équipant chaque roue 102, et d'autre part à chacun des inclinomètres 304 et 306. Optionnellement, l'unité de calcul 308 peut également être connectée à un dispositif externe 310, tel que l'ordinateur de bord du véhicule 302 ou un capteur de mesure de vitesse, lui fournissant la vitesse du véhicule 302 lorsque celui est en mouvement.

En fonction des données reçues par chacun de ces composants, l'unité centrale de calcul 308 détermine au moins un paramètre relatif au véhicule, en utilisant des relations prédéterminées. Le ou les paramètres déterminés par l'unité de calcul 308 peuvent comprendre les paramètres suivants :

- un poids total du véhicule 302,
- un poids d'un essieu du véhicule 302,
- un poids sur un côté du véhicule 302,
- un centre de gravité du véhicule 302,
- un centre de gravité d'un essieu du véhicule 302, et/ou
- un centre de gravité sur un côté du véhicule 302.

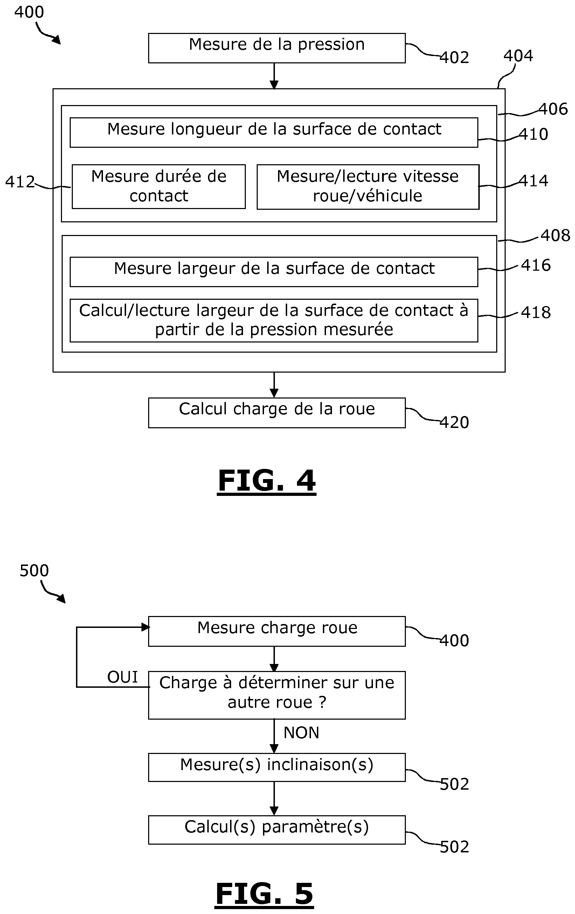

La FIGURE 4 est une représentation schématique d'un exemple de procédé de détermination d'une charge d'une roue selon l'invention.

Le procédé 400 représenté sur la FIGURE 4 comprend une étape 402 de mesure de la pression de la roue.

Puis une étape 404 détermine la surface de contact. Cette étape 404 détermine d'une part une étape 406 de mesure/calcul/détermination de données relatives à la longueur de la surface de contact et une étape 408 de mesure/calcul/détermination de données relatives à la largeur de la surface de contact.

L'étape 406 relative à la longueur de la surface de contact peut comprendre les étapes suivantes :

- une étape 410 de mesure de la longueur de la surface de contact ; ou
- une étape 412 de mesure d'une durée de contact d'un capteur avec le sol et une étape 414 de mesure/lecture de la vitesse de la roue ou du véhicule.

L'étape 408 relative à la largeur de la surface de contact peut comprendre les étapes suivantes :

- une étape 416 de mesure de la largeur de la surface de contact ; ou
- une étape 418 de calcul/lecture d'une largeur à partir de la pression mesurée de la roue et d'une base de données ou d'une relation prédéterminée.

Puis le procédé 400 comprend une étape 420 de calcul de la charge de la roue en fonction des grandeurs mesurées et des relations données plus haut.

La FIGURE 5 est une représentation schématique d'un exemple de procédé caractérisation d'un véhicule selon l'invention.

Le procédé 500 représenté sur la FIGURE 5 comprend une étape 400 de mesure de la charge s'appliquant à une roue du véhicule. Cette étape 400 est réitérée autant de fois que souhaité pour déterminer les valeurs des charges pour au moins deux, en particulier chaque roue du véhicule.

Puis, une étape 502 réalise une ou des mesures d'inclinaison(s). Ces mesures peuvent comprendre une mesure d'une donnée relative à :

- une inclinaison du véhicule suivant une direction d'un essieu du véhicule, et/ou
- une inclinaison du véhicule suivant une direction perpendiculaire à un essieu du véhicule, ou encore
- une inclinaison du véhicule suivant une direction transversale ou diagonale par rapport au véhicule.

Puis, lors d'une étape 504, un/des paramètre(s) relatif(s) au véhicule est/sont calculé(s). Cette étape 504 peut comprendre un calcul d'au moins un paramètre suivant :

- un poids total du véhicule,
- un poids d'un essieu du véhicule,
- un poids sur un côté du véhicule,
- un centre de gravité du véhicule,
- un centre de gravité d'un essieu du véhicule, et/ou
- un centre de gravité sur un côté du véhicule.

Bien sûr, l'invention n'est pas limitée aux exemples qui viennent d'être décrits et de nombreux aménagements peuvent être apportés à ces exemples sans sortir du cadre de l'invention.

## Revendications

1. Procédé (400) pour déterminer une charge d'une roue (102) d'un véhicule (300) comprenant les étapes suivantes :

   - détermination (404) d'au moins une donnée, dite d'empreinte, relative à une surface (124) de contact entre ladite roue (102) et le sol ;
   - calcul (420) de la charge de ladite roue (102) à partir d'une relation prédéterminée reliant ladite au moins une donnée d'empreinte à ladite charge ;

   **caractérisé en ce qu'**il comprend en outre une étape préliminaire de mesure :

   - d'une charge, dite de référence, du véhicule, et
   - d'une surface de contact, dite de référence, pour ladite charge de référence ;

   et **en ce que** l'étape de détermination d'au moins une donnée d'empreinte comprenant une mesure d'une variation de ladite surface de contact par rapport à ladite surface de référence et l'étape de calcul de la charge réalisant un calcul de la charge en fonction de ladite charge de référence, de ladite surface de référence et de ladite variation.

2. Procédé (400) selon la revendication 1, **caractérisé en ce qu'**il comprend en outre une étape (402) de mesure d'au moins une donnée, dite de pression, relative à une pression à l'intérieur de la roue (102) du véhicule, le calcul de la charge de la roue étant réalisé en fonction de ladite donnée de pression et de la donnée d'empreinte.

3. Procédé (400) selon l'une quelconque des revendications précédentes, **caractérisé en ce que** l'étape (404) de détermination de l'au moins une donnée d'empreinte comprend une mesure (406) d'au moins une donnée relative à la longueur de la surface de contact (124) entre ladite roue (102) et le sol suivant une direction perpendiculaire à l'axe de ladite roue (102).

4. Procédé (400) selon la revendication précédente, **caractérisé en ce que**, lorsque le véhicule (302) est en mouvement, l'au moins une donnée relative à la longueur mesurée comprend un temps de contact avec le sol d'un capteur (202) disposé sur ladite roue (102).

5. Procédé (500) pour caractériser un véhicule (302) comprenant plusieurs roues (102), **caractérisé en ce qu'**il comprend les étapes suivantes :

- détermination (400) des charges d'au moins deux roues (102), en particulier de toutes les roues (102), dudit véhicule (302) suivant le procédé selon l'une quelconque des revendications précédentes ; et
- calcul (502) d'au moins un paramètre relatif audit véhicule (302) en fonction desdites charges desdites roues (102).

6. Procédé (500) selon la revendication précédente, **caractérisé en ce qu'**il comprend en outre une mesure (502) d'une donnée relative à :

- une inclinaison du véhicule (302) suivant une direction d'un essieu dudit véhicule (302), et/ou
- une inclinaison du véhicule (302) suivant une direction perpendiculaire à un essieu dudit véhicule (302).

7. Procédé (500) selon l'une quelconque des revendications 5 ou 6, **caractérisé en ce que** le paramètre calculé comprend :

- un poids total du véhicule (302) ou un poids d'un essieu du véhicule (302) ou un poids sur un côté du véhicule (302), et/ou
- un centre de gravité du véhicule (302) ou un centre de gravité d'un essieu du véhicule (302) ou un centre de gravité sur un côté du véhicule (302).

8. Dispositif (100 ; 200) pour déterminer une charge d'une roue (102) d'un véhicule comprenant

- au moins un moyen (106, 112, 116 ; 202, 204) pour déterminer au moins une donnée, dite d'empreinte, relative à une surface de contact (124) entre ladite roue (102) et le sol ;
- au moins un moyen de calcul (122) de la charge de ladite roue (102) à partir d'une relation prédéterminée reliant ladite au moins une donnée d'empreinte à ladite charge ;

**caractérisé en ce que** ces moyens de détermination (106, 112, 116, 202, 204) et ces moyens de calcul (122) sont agencées pour mettre en oeuvre toutes les étapes du procédé selon l'une quelconque des revendications 1 à 4.

9. Dispositif selon la revendication précédente, **caractérisé en ce qu'**il comprend au moins un moyen de mesure (104) d'au moins une donnée, dite de pression, relative à une pression à l'intérieur de ladite roue (102), le moyen de calcul (122) étant configuré pour déterminer la charge de la roue (102) en fonction de ladite pression et de ladite donnée d'empreinte.

10. Dispositif (100 ; 200) selon l'une quelconque des revendications 8 ou 9, **caractérisé en ce que** le moyen pour déterminer au moins une donnée d'empreinte comprend un moyen (106, 112 ; 202) de mesure d'une donnée relative à la longueur de la surface de contact (124) suivant une direction perpendiculaire à l'axe de la roue (102).

11. Dispositif (200) selon la revendication précédente, **caractérisé en ce que** le moyen de mesure d'une donnée relative à la longueur de la surface de contact (124) comprend au moins un capteur (202) disposé sur la roue (102) pour mesurer un temps de contact entre le sol et ladite roue (102), lorsque le véhicule (302) est en mouvement.

12. Système (300) pour caractériser un véhicule (302) comprenant plusieurs roues (102), **caractérisé en ce qu'**il comprend :

- un dispositif (100 ; 200) selon les revendications 8 à 11 ou des moyens configurés pour mettre en oeuvre toutes les étapes du procédé (400) selon l'une quelconque des revendications 1 à 4, pour déterminer les charges d'au moins deux roues (102), en particulier de toutes les roues (102), dudit véhicule (302) ; et
- un moyen (308) de calcul d'au moins un paramètre relatif audit véhicule (302) en fonction desdites charges desdites roues (102).

13. Système (300) selon la revendication précédente, **caractérisé en ce qu'**il comprend en outre au moins un moyen (304, 306) pour mesurer une donnée relative à :

- une inclinaison du véhicule (302) suivant une direction d'un essieu du véhicule (302), et/ou
- une inclinaison du véhicule (302) suivant une direction perpendiculaire à un essieu du véhicule (302).

14. Système (300) selon l'une quelconque des revendications 12 ou 13, **caractérisé en ce que** le moyen de calcul (308) est configuré pour déterminer une donnée relative à :

- un poids total du véhicule (302) ou un poids d'un essieu du véhicule (302) ou un poids sur un côté du véhicule (302), et/ou

- un centre de gravité du véhicule (302) ou un centre de gravité d'un essieu du véhicule (32) ou un centre de gravité sur un côté du véhicule (302).

15. Véhicule (302) comprenant :

- des moyens configurés pour mettre en oeuvre les étapes du procédé (400) selon l'une quelconque des revendications 1 à 4 pour déterminer la charge d'au moins une, de préférence de chaque, roue (102) du véhicule (302) ;
- des moyens configurés pour mettre en oeuvre les étapes du procédé (500) selon l'une quelconque des revendications 5 à 7 pour caractériser ledit véhicule (302) ;
- un dispositif (100 ; 200) selon l'une quelconque des revendications 8 à 11 pour déterminer la charge d'au moins une, de préférence de chaque, roue (102) du véhicule (302) ; ou
- un système (300) selon l'une quelconque des revendications 12 à 14 pour caractériser ledit véhicule (302).

**Patentansprüche**

1. Verfahren (400) zur Bestimmung einer Tragfähigkeit eines Rads (102) eines Fahrzeugs (300), folgende Ablaufschritte umfassend:

- Bestimmung (404) mindestens einer Datenangabe des sogenannten Abdrucks zu einer Kontaktfläche (124) zwischen dem Rad (102) und dem Boden;
- Berechnung (420) der Tragfähigkeit des Rads (102) anhand einer vorbestimmten Relation zwischen der wenigstens einen Abdruckangabe und der Tragfähigkeit;

**dadurch gekennzeichnet, dass** es außerdem einen einleitenden Ablaufschritt zur Messung:

- einer sogenannten Referenztragfähigkeit des Fahrzeugs und
- einer sogenannten Referenzkontaktfläche für die Referenztragfähigkeit

umfasst,
und dass der Ablaufschritt zur Bestimmung mindestens einer Abdruckangabe eine Messung einer Änderung der Kontaktfläche gegenüber der Referenzkontaktfläche umfasst, und wobei bei dem Ablaufschritt zur Berechnung der Tragfähigkeit eine Berechnung der Tragfähigkeit in Abhängigkeit von der Referenztragfähigkeit, der Referenzkontaktfläche und der Änderung berechnet wird.

2. Verfahren (400) nach Anspruch 1, **dadurch gekennzeichnet, dass** es außerdem einen Ablaufschritt (402) zur Messung mindestens einer sogenannten Druckangabe zu einem Druck im Inneren des Rads (102) des Fahrzeugs, wobei die Tragfähigkeit des Rads in Abhängigkeit von der Druckangabe und der Abdruckangabe berechnet wird.

3. Verfahren (400) nach einem der vorhergehenden Ansprüche, **dadurch gekennzeichnet, dass** der Ablaufschritt (404) zur Bestimmung der wenigstens einen Abdruckangabe eine Messung (406) mindestens einer Datenangabe zur Länge der Kontaktfläche (124) zwischen dem Rad (102) und dem Boden in einer Querrichtung zur Achse des Rads (102) umfasst.

4. Verfahren (400) nach dem vorhergehenden Anspruch, **dadurch gekennzeichnet, dass** beim fahrenden Fahrzeug (302) die wenigstens eine Datenangabe zur gemessenen Länge eine Kontaktdauer eines an dem Rad (102) angeordneten Sensors (202) mit dem Boden umfasst.

5. Verfahren (500) zur Kennzeichnung eines mehrere Räder (102) umfassenden Fahrzeugs (302), **dadurch gekennzeichnet, dass** es folgende Ablaufschritte umfasst:

- Bestimmung (400) der Tragfähigkeitswerte mindestens zweier Räder (102), insbesondere aller Räder (102) des Fahrzeugs (302), gemäß dem Verfahren nach einem der vorhergehenden Ansprüche; und
- Berechnung (502) mindestens eines Kennwerts über das Fahrzeug (302) in Abhängigkeit von den Tragfähigkeitswerten der Räder (102).

6. Verfahren (500) nach dem vorhergehenden Anspruch, **dadurch gekennzeichnet, dass** es außerdem eine Messung einer Datenangabe zu:

- einer Neigung des Fahrzeugs (302) gemäß einer Richtung einer Achse des Fahrzeugs (302) und/oder
- einer Neigung des Fahrzeugs (302) gemäß einer Querrichtung zu einer Achse des Fahrzeugs (302)

umfasst.

7. Verfahren (500) nach einem der Ansprüche 5 oder 6, **dadurch gekennzeichnet, dass** der berechnete Kennwert:

- ein Gesamtgewicht des Fahrzeugs (302) oder ein Gewicht einer Achse des Fahrzeugs (302) oder ein Gewicht an einer Seite des Fahrzeugs (302) und/oder
- einen Schwerpunkt des Fahrzeugs (302) oder einen Schwerpunkt einer Achse des Fahrzeugs (302) oder einen Schwerpunkt an einer Seite des Fahrzeugs (302)

umfasst.

8. Vorrichtung (100; 200) zur Bestimmung einer Tragfähigkeit eines Rads (102) eines Fahrzeugs, umfassend:

- mindestens ein Mittel (106, 112, 116; 202, 204) zur Bestimmung mindestens einer sogenannten Abdruckangabe zu einer Kontaktfläche (124) zwischen dem Rad (102) und dem Boden;
- mindestens ein Mittel zur Berechnung (122) der Tragfähigkeit des Rads (102) anhand einer vorbestimmten Relation zwischen der wenigstens einen Abdruckangabe und der Tragfähigkeit;

dadurch gekennzeichnet, dass diese Bestimmungsmittel (106, 112, 116, 202, 204) und diese Berechnungsmittel (122) derart angeordnet sind, dass alle Ablaufschritte des Verfahrens nach einem der Ansprüche 1 bis 4 umgesetzt werden.

9. Vorrichtung nach dem vorhergehenden Anspruch, dadurch gekennzeichnet, dass es wenigstens ein Mittel zur Messung (104) mindestens einer sogenannten Druckangabe zu einem Druck im Inneren des Rads (102) umfasst, wobei das Berechnungsmittel (122) derart ausgestaltet ist, dass die Tragfähigkeit des Rads (102) in Abhängigkeit von dem Druck und der Abdruckangabe bestimmt wird.

10. Vorrichtung (100; 200) nach einem der Ansprüche 8 oder 9, dadurch gekennzeichnet, dass das Mittel zur Bestimmung wenigstens einer Abdruckangabe ein Mittel (106, 112; 202) zur Messung einer Datenangabe zur Länge der Kontaktfläche (124) in einer Querrichtung zur Achse des Rads (102) umfasst.

11. Vorrichtung (200) nach dem vorhergehenden Anspruch, dadurch gekennzeichnet, dass das Mittel zur Messung einer Datenangabe zur Länge der Kontaktfläche (124) mindestens einen Sensor (202) umfasst, welcher an dem Rad (102) gelagert ist, um eine Kontaktdauer zwischen dem Boden und dem Rad (102) bei fahrendem Fahrzeug (302) zu messen.

12. System (300) zur Kennzeichnung eines mehrere Räder (102) umfassenden Fahrzeugs (302), dadurch gekennzeichnet, dass es:

- eine Vorrichtung (100; 200) nach den Ansprüchen 8 bis 11 oder derart ausgestaltete Mittel, dass alle Ablaufschritte des Verfahrens (400) nach einem der Ansprüche 1 bis 4 eingesetzt werden und die Tragfähigkeitswerte mindestens zweier Räder (102), insbesondere aller Räder (102) des Fahrzeugs (302) bestimmt werden, und
- ein Mittel (308) zur Berechnung mindestens eines Kennwerts über das Fahrzeug (302) in Abhängigkeit von den Tragfähigkeitswerten der Räder (102)

umfasst.

13. System (300) nach dem vorhergehenden Anspruch, dadurch gekennzeichnet, dass es außerdem mindestens ein Mittel (304, 306) zur Messung einer Datenangabe zu:

- einer Neigung des Fahrzeugs (302) gemäß einer Richtung einer Achse des Fahrzeugs (302) und/oder
- einer Neigung des Fahrzeugs (302) gemäß einer Querrichtung zu einer Achse des Fahrzeugs (302)

umfasst.

14. System (300) nach einem der Ansprüche 12 oder 13, dadurch gekennzeichnet, dass das Berechnungsmittel (308) derart ausgestaltet ist, dass eine Datenangabe zu:

- einem Gesamtgewicht des Fahrzeugs (302) oder einem Gewicht einer Achse des Fahrzeugs (302) oder einem Gewicht an einer Seite des Fahrzeugs (302) und/oder
- einem Schwerpunkt des Fahrzeugs (302) oder einem Schwerpunkt einer Achse des Fahrzeugs (302) oder einen Schwerpunkt an einer Seite des Fahrzeugs (302)

bestimmt wird.

15. Fahrzeug (302), umfassend:

- Mittel, derart ausgestaltet, dass die Ablaufschritte des Verfahrens (400) nach einem der Ansprüche 1 bis 4 zur Bestimmung der Tragfähigkeit mindestens eines, vorzugsweise jedes Rads (102) des Fahrzeugs (302) umgesetzt werden.
- Mittel, derart ausgestaltet, dass die Ablaufschritte des Verfahrens (500) nach einem der Ansprüche 5 bis 7 zur Kennzeichnung des Fahrzeugs (302) umgesetzt werden;
- eine Vorrichtung (100; 200) nach einem der Ansprüche 8 bis 11 zur Bestimmung der Tragfähigkeit mindestens eines, vorzugsweise jedes Rads (102) des Fahrzeugs (302); oder
- ein System (300) nach einem der Ansprüche 12 bis 14 zur Kennzeichnung des Fahrzeugs (302).

**Claims**

1. A method (400) for determining the load on a wheel (102) of a vehicle (300) comprising the following steps:

   - determining (404) at least one data, said footprint data, relating to a contact surface (124) between said wheel (102) and the ground;
   - calculating (420) the load on said wheel (102) from a predetermined relationship linking said at least one footprint data to said load;

   **characterised in that** it further comprises a preliminary measurement step:

   - of a load, said reference load, of the vehicle, and
   - of a contact surface, said reference surface, for said reference load;

   and **in that** the determination step of the at least one footprint data comprising a measurement of a variation of said contact surface with respect to said reference surface and the calculation step of the load peforming a calculation of the load as a function of said reference load, of said reference surface and of said variation.

2. The method (400) according to claim 1, **characterised in that** it further comprises a measurement step (402) of at least one data, said pressure data, relating to the pressure inside the wheel (102) of the vehicle, the load on the wheel being calculated as a function of said pressure data and of the footprint data.

3. The method (400) according to anyone of the preceding claims, **characterised in that** the step (404) for determining the at least one footprint data comprises a measurement (406) of at least one data relating to the length of the contact surface (124) between said wheel (102) and the ground in a direction perpendicular to the axis of said wheel (102).

4. The method (400) according to the preceding claim, **characterised in that** when the vehicle (302) is moving, the at least one data relating to the measured length comprises a contact time with the ground of a sensor (202) located on said wheel (102).

5. The method (500) for characterising a vehicle (302) that comprises a plurality of wheels (102), **characterised in that** it comprises the following steps:

   - determining (400) the loads on at least two wheels (102), in particular on all the wheels (102), of said vehicle (302) according to the method according to anyone of the preceding claims; and
   - calculating (502) at least one parameter relating to said vehicle (302) as a function of said loads on said wheels (102).

6. The method (500) according to the preceding claim, **characterised in that** it further comprises a measurement (502) of a data relating to:

   - an inclination of the vehicle (302) along a direction of an axle of said vehicle (302), and/or
   - an inclination of the vehicle (302) along a direction perpendicular to an axle of said vehicle (302).

7. The method (500) according to anyone of claims 5 or 6, **characterised in that** the calculated parameter comprises:

   - the total weight of the vehicle (302) or the weight on an axle of the vehicle (302) or the weight on a side of the vehicle (302), and/or
   - the centre of gravity of the vehicle (302) or the centre of gravity of an axle of the vehicle (302) or the centre of gravity on a side of the vehicle (302).

8. A device (100; 200) for determining the load on a wheel (102) of a vehicle comprising:

   - at least one means (106, 112, 116; 202, 204) for determining at least one data, said footprint data, relating to a contact surface (124) between said wheel (102) and the ground;
   - at least one means (122) for calculating the load on said wheel (102) from a predetermined relationship linking said at least one footprint data to said load;

   **characterised in that** these determination means (106, 112, 116, 202, 204) and these calculation means (122) are configured to implement all the steps of the method according to anyone of claims 1 to 4.

9. The device according to the preceding claim, **characterised in that** it comprises at least one measurement means (104) for at least one data, said pressure data, relating to the pressure inside said wheel (102), the calculation means (122) being configured to determine the load on the wheel (102) as a function of said pressure and of said footprint data.

10. The device (100; 200) according to one of claims 8 or 9, **characterised in that** the means for determining at least one footprint data comprises a means (106, 112; 202) to measure a data relative to the length of the contact surface (124) in a direction perpendicular to the axis of the wheel (102).

11. The device (200) according to the preceding claim, **characterised in that** the means for measuring a data relative to the length of the contact surface (124) comprises at least one sensor (202) located on the wheel (102) to measure a contact time between the ground and said wheel (102) when the vehicle (302) is in movement.

12. A system (300) for characterising a vehicle (302) that comprises a plurality of wheels (102), **characterised in that** it comprises:

   - a device (100; 200) according to claims 8 to 11 or means configured to implement all the steps of the method (400) according to anyone of claims 1 to 4, for determining the loads on at least two wheels (102), in particular on all the wheels (102), of said vehicle (302); and
   - a means for (308) calculating at least one parameter relating to said vehicle (302) as a function of said loads on said wheels (102).

13. The system (300) according to the preceding claim, **characterised in that** it further comprises at least one means (304, 306) for measuring a data relating to:

   - an inclination of the vehicle (302) along a direction of an axle of said vehicle (302), and/or
   - an inclination of the vehicle (302) along a direction perpendicular to an axle of said vehicle (302).

14. The system (300) according to anyone of claims 12 or 13, **characterised in that** the calculation means (308) is configured to determine a data relating to:

   - the total weight of the vehicle (302) or the weight on an axle of the vehicle (302) or the weight on a side of the vehicle (302), and/or
   - the centre of gravity of the vehicle (302) or the centre of gravity of an axle of the vehicle (302) or the centre of gravity on a side of the vehicle (302).

15. A vehicle (302) comprising:

   - means configured to implement the steps of the method (400) according to anyone of claims 1 to 4 for determining the load on at least one, preferably on each, wheel (102) of the vehicle (302);
   - means configured to implement the steps of the method (500) according to anyone of claims 5 to 7 for characterising said vehicle (302);
   - a device (100; 200) according to anyone of claims 8 to 11 for determining the load on at least one, preferably on each, wheel (102) of the vehicle (302); or
   - a system (300) according to anyone of claims 12 to 14 for characterising said vehicle (302).

**FIG. 1a**

**FIG. 1b**

**FIG. 1c**

**FIG. 1d**

**FIG. 2a**

**FIG. 2b**

**FIG. 2c**

**FIG. 2d**

300

302          308

310

102    304        102        102

**FIG. 3a**

300

302

308

102        306        102

**FIG. 3b**

400

| Mesure de la pression | —402 |
|---|---|

404

406

410

| Mesure longueur de la surface de contact | |
|---|---|

412

| Mesure durée de contact | Mesure/lecture vitesse roue/véhicule | 414 |
|---|---|---|

408

| Mesure largeur de la surface de contact | 416 |
|---|---|

| Calcul/lecture largeur de la surface de contact à partir de la pression mesurée | 418 |
|---|---|

| Calcul charge de la roue | —420 |
|---|---|

## **FIG. 4**

500

| Mesure charge roue | —400 |
|---|---|

OUI | Charge à déterminer sur une autre roue ?

NON

| Mesure(s) inclinaison(s) | —502 |
|---|---|

| Calcul(s) paramètre(s) | —502 |
|---|---|

## **FIG. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2679411 A2